# DEMANDE DE BREVET EUROPEEN

(11) **EP 4 632 579 A1**
(43) Date de publication de la demande: **15.10.2025**
(21) Numéro de dépôt: 25166581.6
(22) Date de dépôt: 27.03.2025
(51) Int. Cl.: G06F 11/10, G06F 21/57

(54) **PROCEDE DE PROTECTION D'UN MICROCONTROLEUR**

(30) Priorité: 09.04.2024 FR 2403635
(71) Demandeur: STMicroelectronics International N.V., 1228 Plan-les-Ouates, Geneva (CH)
(72) Inventeur: CLAUSS, Raphael, 38120 ST EGREVE (FR); BRIAT, Gerald, 38450 VIF (FR); DALLERY, Chrislain, 38690 LE GRAND LEMPS (FR); BERTHON, Paul, 38000 GRENOBLE (FR)
(74) Mandataire: Cabinet Beaumont

(57) **Abrégé**

La présente description concerne un procédé de protection d'un microcontrôleur (100) comprenant, dans une phase de personnalisation : le calcul d'une première somme de contrôle (Checksum 1) sur le contenu d'au moins un registre de configuration (UCONF WR) du microcontrôleur stocké dans une première mémoire, et le stockage, dans la première mémoire, de ladite première somme de contrôle (Checksum 1) ; et la copie de ladite première somme de contrôle et dudit registre vers une deuxième mémoire (104,120) ; dans une phase de démarrage : la recopie de la première somme de contrôle et du registre, de la deuxième mémoire (104,120) vers la première mémoire ; et la comparaison entre une deuxième somme de contrôle ((Checksum 2), calculée sur le contenu du registre recopié (UCONF RD), et la première somme de contrôle recopiée.

## Description

### Domaine technique

La présente description concerne de façon générale les procédés de protection de microcontrôleurs ainsi que les microcontrôleurs mettant en oeuvre de tels procédés.

### Technique antérieure

Certains microcontrôleurs utilisent des registres de configuration préchargés au démarrage à partir d'une mémoire non volatile et qui peuvent être mis à jour. Au démarrage, ces registres sont accessibles par différents composants du microcontrôleur et permettent leur configuration.

### Résumé de l'invention

Il existe un besoin de protéger les composants du microcontrôleur contre des attaques visant les registres et notamment les registres de configuration.

Un mode de réalisation pallie tout ou partie des inconvénients des procédés connus.

Un mode de réalisation prévoit un procédé de protection d'un microcontrôleur comprenant,
- dans une phase de personnalisation :
   le calcul d'une première somme de contrôle sur le contenu d'au moins un registre de configuration du microcontrôleur stocké dans une première mémoire, et le stockage, dans la première mémoire, de ladite première somme de contrôle ; et
   la copie de ladite première somme de contrôle et dudit registre vers une deuxième mémoire ;
- dans une phase de démarrage : la recopie de la première somme de contrôle et du registre, de la deuxième mémoire vers la première mémoire ; et la comparaison entre une deuxième somme de contrôle, calculée sur le contenu du registre recopié, et la première somme de contrôle recopiée.

Un mode de réalisation prévoit un microcontrôleur comprenant une première et une deuxième mémoire, et configuré pour,
- lors d'une phase de personnalisation : calculer d'une première somme de contrôle sur le contenu d'au moins un registre de configuration du microcontrôleur stocké dans la première mémoire et stocker, dans la première mémoire, ladite première somme de contrôle ; et copier ladite première somme de contrôle et ledit registre vers la deuxième mémoire;
- lors d'une phase démarrage : recopier la première somme de contrôle et le registre, de la deuxième mémoire vers la première mémoire ; et effectuer une comparaison entre une deuxième somme de contrôle, calculée à partir du registre recopié, et la première somme de contrôle recopiée.

Dans un mode de réalisation, lorsque la première et la deuxième sommes de contrôle sont différentes lors de la comparaison, alors les valeurs du registre recopié sont modifiées.

Dans un mode de réalisation, lorsque la première et la deuxième sommes de contrôle sont identiques lors de la comparaison, alors le registre recopié n'est pas modifié.

Dans un mode de réalisation, la configuration du microcontrôleur, définie par les valeurs modifiées du registre, correspond à un niveau de restriction d'accès maximal.

Dans un mode de réalisation, la configuration du microcontrôleur, définie par les valeurs modifiées du registre, correspond à un niveau de restrictions de mode d'adressage maximal.

Dans un mode de réalisation, la configuration du microcontrôleur, définie par les valeurs modifiées du registre, correspond à un niveau d'interdiction d'accès de programme de démarrage maximal.

Dans un mode de réalisation, les niveaux d'interdiction d'accès de programme de démarrage correspondent par exemple à des niveaux de protection de programmes de démarrage installés successivement, les niveaux de protection étant implémentés en utilisant un compteur monotonique.

Dans un mode de réalisation, la configuration du microcontrôleur, définie par les valeurs modifiées du registre, comprend un état de cycle de vie du microcontrôleur correspondant à un mode (provisioning) où le contenu des programmes du microcontrôleur est inaccessible.

Dans un mode de réalisation, la deuxième somme de contrôle est calculée périodiquement.

Dans un mode de réalisation, le stockage de la première somme de contrôle recopiée est réalisé dans un registre de la première mémoire.

Dans un mode de réalisation, la première mémoire est une mémoire volatile.

Dans un mode de réalisation, la deuxième mémoire est une mémoire non volatile.

Dans un mode de réalisation, la première et la deuxième sommes de contrôle sont basées sur des calculs de redondance cyclique.

Dans un mode de réalisation, le calcul des premières et deuxièmes sommes de contrôle ainsi que leur comparaison sont mises en œuvre par une interface mémoire de la première mémoire ou de la deuxième mémoire.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
La figure 1 représente, de façon très schématique et sous forme de blocs, un exemple de circuit intégré du type auquel s'appliquent les modes de réalisation décrits ;
la figure 2 représente schématiquement un procédé de fonctionnement du microcontrôleur de la figure 1 selon un exemple ;
la figure 3 représente schématiquement un procédé de fonctionnement du microcontrôleur de la figure 1 selon un mode de réalisation ;
la figure 4 représente schématiquement une phase d'un procédé de fonctionnement du microcontrôleur de la figure 1 selon un mode de réalisation ; et
la figure 5 représente schématiquement une autre phase d'un procédé de fonctionnement du microcontrôleur de la figure 1 selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

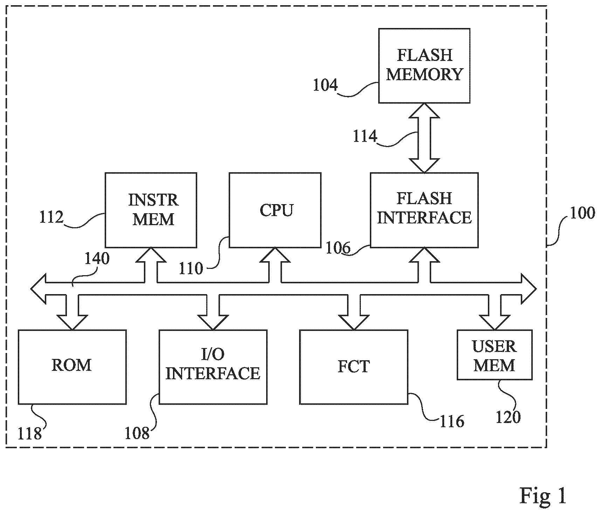

La figure 1 représente, de façon très schématique et sous forme de blocs, un exemple de circuit intégré 100 du type auquel s'appliquent les modes de réalisation décrits. Le circuit 100 est par exemple un microcontrôleur.

Le circuit 100 comprend une mémoire non-volatile 104 (NVM), par exemple de type mémoire FLASH ou à changement de phase (Phase change memory, PCM, en anglais), capable de communiquer, via un bus de communication 114, avec une interface de mémoire non-volatile 106 (NVM INTERFACE) configurée pour écrire ou lire des données dans et depuis la mémoire non-volatile 104 mais également réaliser des opérations sur les données.

Le circuit 100 comprend en outre, par exemple, une unité de traitement 110 (CPU) comprenant un ou plusieurs processeurs sous contrôle d'instructions stockées dans une mémoire d'instructions 112 (INSTR MEM). La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande). La mémoire non volatile 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le circuit 100 peut intégrer d'autres circuits mettant en oeuvre d'autres fonctions, par exemple des blocs électroniques de propriété intellectuelle IP (IP, Intellectual Property core en anglais) comme par exemple, une ou plusieurs mémoires volatiles et/ou non-volatiles, ou d'autres unités de traitement, symbolisées par un bloc 116 (FCT) en figure 1. Parmi d'autres circuits, le circuit 100 comporte par exemple une mémoire morte ou statique 118 (ROM).

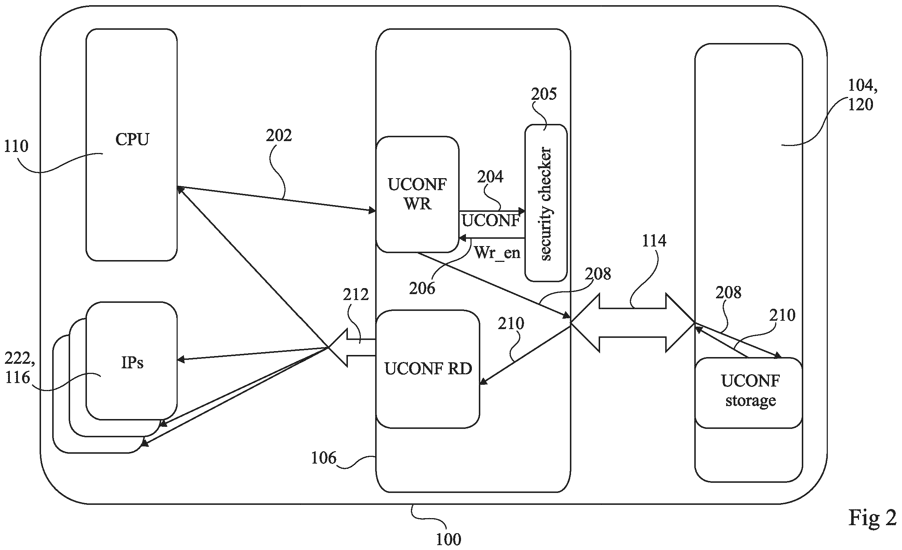

La figure 2 représente schématiquement un procédé de fonctionnement du microcontrôleur 100 de la figure 1 selon un exemple.

Dans l'exemple représenté, une phase de personnalisation comprend des étapes successives 202, 204, 206 et 208.

Dans l'étape 202 (UNCONF WR), l'unité de traitement 110 écrit des valeurs dans N registres appelés UCONF d'une première mémoire. Dans la suite du texte, lorsqu'il est fait référence à un registre, ce terme désigne un ou plusieurs registres de configuration. Ces registres UCONF comprennent par exemple des informations de configuration liées à la sécurité telles que des premiers et deuxième niveaux de restriction d'accès comme par exemple ceux mis en oeuvre avec le protocole TrustZone de l'architecture ARM^{®} CORTEX-M. D'autres exemples d'informations de configuration de sécurité consistent par exemple en la définition d'une application avec un premier niveau de privilèges (priviledged, Priv) qui donne plus de droits qu'un deuxième niveau de privilèges (unpriviledged, unPriv). Les premiers et deuxième niveaux de privilèges sont par exemple ceux mis en oeuvre avec une architecture ARM^{®}. Ainsi, une application configurée avec le premier mode de privilèges (Priv), autrement dit dans un premier mode de restriction de mode d'adressage, a par exemple son propre espace avec des adresses physiques. Une application mise en oeuvre avec le deuxième mode de privilèges (unPriv), autrement dit dans un deuxième mode de restriction de mode d'adressage, a par exemple son propre espace avec des adresses virtuelles et ne peut pas avoir accès à d'autres processus liés à la mémoire qui utiliseraient directement des adresses physiques. Les registres UCONF comprennent par exemple d'autres informations de configuration liées à la sécurité telles que des informations sur le cycle de vie du produit (product state ou life cycle en anglais), des informations de zones de niveaux d'isolation (Timing isolation level areas en anglais), des adresses indiquant où l'unité de de traitement 110 doit démarrer ou encore des clés de sécurité.

Dans un exemple, ces N registres de configuration UCONF sont codés sur 32 bits.

Dans un autre exemple ces registres sont stockés, lorsqu'ils sont écrits par l'unité de traitement 110, dans une première mémoire volatile.

Dans l'étape 204, les valeurs des registres sont examinées par un circuit de vérification 205 (security checker) qui est par exemple mis en oeuvre par l'interface mémoire 106. Le circuit de vérification 205 vérifie par exemple si les configurations stockées dans les registres UCONF sont légales.

Si aucun problème n'est détecté, alors l'étape 206 est mise en oeuvre et le circuit de vérification 205 génère un ou des signaux Wr_en qui sont par exemple codés sur plusieurs bits pour assurer une sécurité de l'information.

Lorsque le signal Wr_en est généré, l'étape 208 (UCONF storage) est mise en oeuvre et les registres UCONF sont écrits dans une mémoire non volatile, par exemple la mémoire 104 ou 120, par exemple via un bus comme le bus 114.

Cette phase de personnalisation est mise en oeuvre par exemple par un utilisateur professionnel comme un sous-traitant ou un intégrateur du microcontrôleur 100.

Dans une phase de démarrage comprenant des étapes 210 et 212 successives, le microprocesseur 110 est redémarré.

Dans l'étape 210, les registres stockés dans la mémoire non volatile 104, sont lus et recopiés (UCONF RD) vers une mémoire par exemple volatile, par exemple la première mémoire.

Dans l'étape 212, les blocs 108,116 ou 118, des blocs 222 (IPs) ou l'unité 110 sont configurés en utilisant les valeurs des registres de configuration recopiés (UCONF RD). Les blocs 222 sont par exemple des blocs électroniques de propriété intellectuelle IP.

Lors de la recopie des valeurs des registres depuis la deuxième mémoire, des attaques ou piratages peuvent être mis en oeuvre pour par exemple modifier les valeurs des registres de configuration ou encore donner des informations utiles pour d'autres types de piratage ultérieurs. Ces attaques peuvent en outre ouvrir des portes d'entrées temporaires pour des programmes malveillants.

Afin de réduire l'impact ou empêcher ces attaques, il est possible par exemple de copier, à l'étape 208, deux ou plusieurs fois les valeurs des registres, ou leur inverse, à deux emplacements différents. Cela nécessite néanmoins de mobiliser des tailles de puce importantes. Il est en outre possible d'utiliser des codes de correction d'erreur. Néanmoins cette solution ne permet une correction que sur deux ou trois bits corrompus et nécessite une augmentation du nombre de registres.

Pour pallier à ces inconvénients, les modes de réalisation décrits proposent un procédé de protection du microcontrôleur 100 comprenant,
- dans une phase de personnalisation :
   le calcul d'une première somme de contrôle (checksum 1) sur le contenu d'au moins un registre de configuration (UCONF WR) du microcontrôleur stocké dans une première mémoire, et le stockage, dans la première mémoire, de ladite première somme de contrôle ; et
   la copie de ladite première somme de contrôle et dudit registre (UCONF WR) vers une deuxième mémoire 104,120;
- dans une phase de démarrage :
   la recopie de la première somme de contrôle, checksum 1, et du registre, de la deuxième mémoire vers la première mémoire ; et
   la comparaison entre une deuxième somme de contrôle (Checksum 2), calculée sur le contenu du registre recopié (UCONF RD), et la première somme de contrôle recopiée.

Un avantage de ce procédé est qu'il permet de diminuer les coûts de fabrication, tout en permettant un traitement rapide et en garantissant un haut niveau de sécurisation es registres de configuration. D'autre part, ce procédé est compatible avec des codes de redondance cycliques de 8,16,32 ou plus bits.

Lorsque la première et la deuxième sommes de contrôle sont différentes lors de la comparaison, ce qui peut correspondre à une attaque, alors le registre recopié est modifié pour que ses valeurs correspondent à une configuration de sécurisation maximale. Les fonctions 108, 116, 118, 222 sont ainsi potentiellement reconfigurées pour être dans des modes de protection maximale.

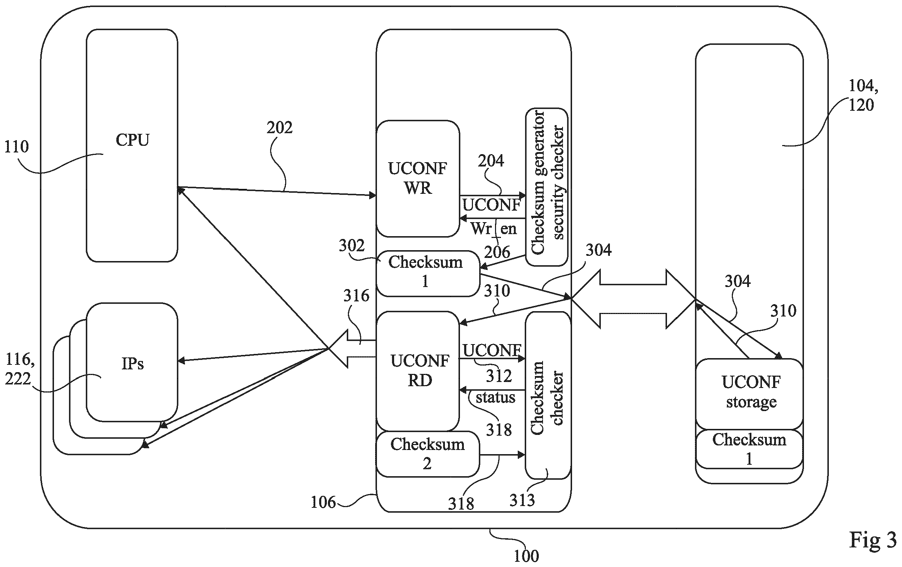

La figure 3 représente schématiquement un procédé de fonctionnement du microcontrôleur de la figure 1 selon un mode de réalisation.

Dans l'exemple représenté, la phase de personnalisation comprend les étapes 202, 204 et 206 qui sont identiques à celles de l'exemple de la figure 2, ainsi que des étapes 302 et 304 successives.

Dans l'étape 302, postérieure à l'étape 206, une fois le signal Wr_en généré, une première somme de contrôle checksum 1 (checksum en anglais) est calculée par une unité de calcul (Checksum generator) par exemple intégrée à l'unité de contrôle 205 de l'interface mémoire 106.

Dans un exemple, une somme de contrôle Checksum 1 est par exemple calculée pour chacun des registres UCONF WR. Il y a donc potentiellement autant de premières sommes de contrôle que de registres de configuration.

De façon générique, une somme de contrôle est le résultat de l'exécution d'un algorithme, par exemple appelé fonction de hachage cryptographique, sur une donnée, ici les valeurs contenues dans un registre. Il existe de nombreuses fonctions de hachage comme MD5, SHA1, SHA256.

Dans un autre exemple, les sommes de contrôle sont mises en oeuvre avec un calcul de redondance cyclique (CRC, cyclic redundancy check en anglais).

S'en suit l'étape 304, dans laquelle la première somme de contrôle calculée, pour chaque registre, ainsi que les registres associés (UCONF storage), sont copiés puis stockés dans la deuxième mémoire 104,120.

Dans une phase ultérieure de démarrage du microcontrôleur et de son unité de traitement, autrement dit du microprocesseur 110, les valeurs des registres UCONF storage et les sommes de contrôles associées copiées dans la deuxième mémoire, sont recopiés, lors d'une étape 310, vers un registre respectif UCONF_CRC_EXP d'une mémoire, par exemple volatile, qui est par exemple la première mémoire.

Dans un exemple, la première mémoire fait partie du bloc 116.

Dans une étape 316, ultérieure à l'étape 310 et similaire à l'étape 212, les valeurs recopiées des registres (UCONF RD) peuvent servir par exemple à la configuration des blocs 108, 116, 118, 222 (IPs) et/ou de l'unité 110.

Dans une étape 318, ultérieure à l'étape 316, une unité de comparaison 313 (Checksum checker), par exemple mise en oeuvre par une interface mémoire telle que l'interface mémoire 106 ou par l'unité de contrôle 205, calcule une deuxième somme de contrôle Checksum 2 pour chaque registre recopié. Dans un exemple, l'unité de contrôle 205 et l'unité de comparaison 313 sont un même circuit, par exemple formé dans l'interface mémoire 106. L'unité de comparaison 313 compare ces deuxièmes sommes de contrôle qui ont été calculées avec les premières sommes de contrôle respectives qui ont été recopiées et stockées dans les registres respectifs UCONF_CRC_EXP. En fonction du résultat de la comparaison, l'état d'un ou plusieurs signaux appelé(s) « status », par exemple codés sur plusieurs bits, indique si la comparaison met en exergue une différence entre les sommes de contrôles recopiées et les sommes de contrôles recalculées. Dans le cas où les sommes de contrôle sont identiques alors les valeurs des registres UCONF RD restent inchangées. Dans le cas où les premières et deuxièmes sommes de contrôle sont différentes lors de la comparaison, alors les valeurs des registres recopiés UCONF RD sont modifiées, par exemple par l'unité de contrôle 205 ou l'unité de comparaison 313, pour prendre des valeurs de configuration plus strictes en matière d'accès et de sécurisation. Cette modification reste valable jusqu'au prochain redémarrage du microprocesseur 110 ou du microcontrôleur 100. Les blocs 108, 116, 118, 222 (IPs) et/ou le processeur 110 voient ainsi leur configuration modifiée vers une configuration plus stricte en matière d'accès et/ou de sécurisation.

Dans un exemple de configuration plus stricte en matière d'accès et/ou de sécurisation, une configuration du microcontrôleur ou du microprocesseur 110, définie par le ou les registres UCONF RD modifiés, comprend un niveau maximal de restriction d'accès correspondant par exemple au mode « secure » du protocole TrustZone de l'architecture ARM^{®}.

Dans un autre exemple, la configuration du microcontrôleur 100, ou du microprocesseur 110, définie par le ou les registres UCONF RD modifiés, comprend un niveau maximal de restrictions de mode d'adressage (priviledged en anglais).

Dans un autre exemple, la configuration du microcontrôleur 100, ou du microprocesseur 110, définie par le ou les registres UCONF RD modifiés, comprend un niveau maximal d'interdiction d'accès de programme de démarrage (HDPL0). Dans cet exemple, les niveaux d'interdiction d'accès de programme de démarrage (HDPL) correspondent par exemple à des niveaux de protection de programmes de démarrage installés successivement, les niveaux de protection étant implémentés en utilisant un compteur monotonique.

Dans un autre exemple, la configuration du microcontrôleur 100, ou du microprocesseur 110, définie par le ou les registres UCONF RD modifiés, correspond à un état de cycle de vie du microcontrôleur (product_state) correspondant à un mode (appelé provisioning en anglais) où le contenu des programmes du microcontrôleur est inaccessible. Autrement dit, dans cet état, même le fabricant du microcontrôleur ne peut accéder au contenu des programmes du microcontrôleur ou du microprocesseur 110.

L'étape 318 peut être mise en oeuvre à chaque phase de démarrage ou bien au bout de plusieurs redémarrages.

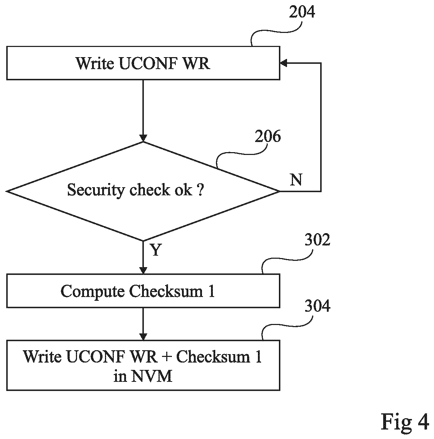

La figure 4 représente schématiquement une phase d'un procédé de fonctionnement du microcontrôleur de la figure 1 selon un mode de réalisation. Plus particulièrement, l'exemple représenté illustre la phase de personnalisation.

La phase de personnalisation de la figure 4 comprend l'étape 204 (Write UCONF WR) qui est suivie par l'étape 206 (Security check ok ?). Si lors de l'étape 206, l'unité de contrôle détecte un défaut (chemin « N ») alors par exemple l'étape 204 est recommencée ou une erreur est renvoyée vers l'unité de traitement 110. Si lors de l'étape 206 l'unité de contrôle ne détecte pas de défaut (chemin « Y ») alors l'étape 302 (Compute Checksum 1) est mise en oeuvre.

Une fois la première somme de contrôle calculée, alors l'étape 304 (Write UCONF WR + Checksum 1 in NVM) est mise en oeuvre et les valeurs des registres UCONF WR ainsi que leurs premières sommes de contrôle respectives sont écrites dans la deuxième mémoire 104,120.

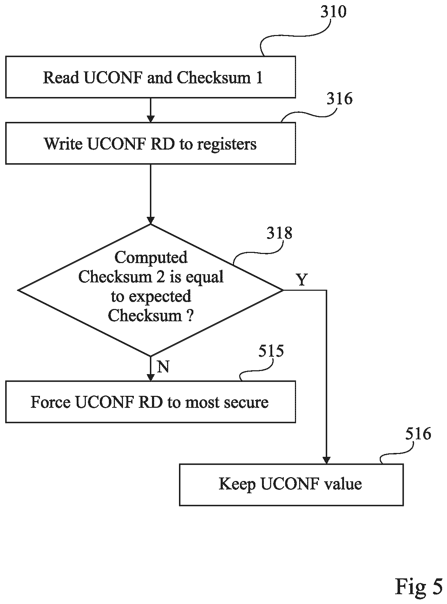

La figure 5 représente schématiquement une autre phase d'un procédé de fonctionnement du microcontrôleur de la figure 1 selon un mode de réalisation. Plus particulièrement, l'exemple de la figure 5 illustre une phase de démarrage.

Dans l'exemple représenté, après démarrage du microcontrôleur 100 ou du microprocesseur 110, l'étape 310 (Read UCONF and Checksum 1) est mise en oeuvre. Dans cette étape, les valeurs des registres et les sommes de contrôle associées stockées dans la deuxième mémoire 104,120 sont recopiées dans la première mémoire par exemple.

L'étape 316 (Write UCONF RD to registers) est ensuite mise en oeuvre. Dans cette étape, des registres des différents blocs 108, 116, 118, 222 (IPs) et/ou l'unité 110 sont écrits avec les valeurs respectives des registres de configuration UCONF RD recopiés.

L'étape 318 (Computed Checksum 2 is equal to expected Checksum ?) est ensuite mise en oeuvre. Si les deuxièmes sommes de contrôle calculées sont égales aux premières sommes de contrôle respectives qui ont été recopiées à l'étape 310 (branche Y), alors une étape 516 (Keep UCONF value) est mise en oeuvre. Dans cette étape 516, les valeurs des registres de configuration UCONF RD restent inchangées. Si les deuxièmes sommes de contrôle calculées sont différentes des premières sommes de contrôle respectives qui ont été copiées dans les registres respectifs UCONF_CRC_EXP à l'étape 310 (branche N), alors une étape 515 (Force UCONF RD to most secure) est mise en oeuvre. Dans cette étape 515, les valeurs des registres recopiés UCONF RD sont modifiées, par exemple par l'unité de contrôle 205 ou l'unité de comparaison 313, et remplacées par les valeurs de configuration les plus strictes en matière d'accès et de sécurisation. Cette modification reste valable jusqu'au prochain redémarrage du microprocesseur 110 ou du microcontrôleur 100. Les blocs 108, 116, 118, 222 (IPs) et/ou le processeur 110 voient ainsi leur configuration modifiée vers une configuration plus stricte en matière d'accès et/ou de sécurisation ce qui permet de limiter les effets d'une attaque.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, dans l'étape 515, les valeurs des registres recopiés UCONF RD pourront être modifiées et remplacées par les valeurs de configuration qui soient plus strictes en matière d'accès et de sécurisation tout en n'étant pas les conditions les plus strictes en matière d'accès et de sécurisation possibles.

Enfin, la mise en oeuvre pratique des modes de réalisation et variantes décrits est à la portée de la personne du métier à partir des indications fonctionnelles données ci-dessus. En particulier, pour ce qui est du calcul des deuxièmes sommes de contrôle, il pourra être réalisé à chaque cycle de démarrage ou au bout de plusieurs cycles de démarrage. De plus, à chaque cycle de démarrage, il sera possible par exemple de calculer la deuxième somme de contrôle sur les valeurs d'un seul ou de quelques-uns seulement des registres de configuration.

Dans un autre exemple l'étape 318 peut avoir lieu avant l'étape 316.

## Revendications

1. Procédé de protection d'un microcontrôleur (100) comprenant,
- dans une phase de personnalisation :
le calcul d'une première somme de contrôle (Checksum 1) sur le contenu d'au moins un registre de configuration (UCONF WR) du microcontrôleur stocké dans une première mémoire du microcontrôleur, et le stockage, dans la première mémoire, de ladite première somme de contrôle (Checksum 1) ; et
la copie de ladite première somme de contrôle et dudit registre vers une deuxième mémoire (104,120) du microcontrôleur ;
- dans une phase de démarrage :
la recopie de la première somme de contrôle et du registre, de la deuxième mémoire (104,120) vers la première mémoire ; et
la comparaison entre une deuxième somme de contrôle (Checksum 2), calculée sur le contenu du registre recopié (UCONF RD), et la première somme de contrôle recopiée.

2. Microcontrôleur (100) comprenant une première et une deuxième mémoire (104,120), et configuré pour,
- lors d'une phase de personnalisation :
calculer d'une première somme de contrôle (Checksum 1) sur le contenu d'au moins un registre de configuration du microcontrôleur stocké dans la première mémoire et stocker, dans la première mémoire, ladite première somme de contrôle (Checksum 1); et
copier ladite première somme de contrôle et ledit registre vers la deuxième mémoire;
- lors d'une phase démarrage :
recopier la première somme de contrôle et le registre, de la deuxième mémoire (104,120) vers la première mémoire ; et
effectuer une comparaison entre une deuxième somme de contrôle (Checksum 2), calculée à partir du registre recopié (UCONF RD), et la première somme de contrôle recopiée.

3. Procédé selon la revendication 1 ou microcontrôleur selon la revendication 2, dans lequel, lorsque la première et la deuxième sommes de contrôle sont différentes lors de la comparaison, alors les valeurs du registre recopié (UCONF RD) sont modifiées.

4. Procédé ou microcontrôleur selon la revendication 3, dans lequel, lorsque la première et la deuxième sommes de contrôle sont identiques lors de la comparaison, alors le registre recopié (UCONF RD) n'est pas modifié.

5. Procédé ou microcontrôleur selon la revendication 3 ou 4, dans lequel la configuration du microcontrôleur, définie par les valeurs modifiées du registre, correspond à un niveau de restriction d'accès maximal (secure).

6. Procédé ou microcontrôleur selon l'une quelconque des revendications 3 à 5, dans lequel la configuration du microcontrôleur, définie par les valeurs modifiées du registre, correspond à un niveau de restrictions de mode d'adressage (priviledged) maximal.

7. Procédé ou microcontrôleur selon l'une quelconque des revendications 3 à 6, dans lequel la configuration du microcontrôleur, définie par les valeurs modifiées du registre, correspond à un niveau d'interdiction d'accès de programme de démarrage (HDPL0) maximal.

8. Procédé ou microcontrôleur selon la revendication 7, dans lequel les niveaux d'interdiction d'accès de programme de démarrage (HDPL) correspondent par exemple à des niveaux de protection de programmes de démarrage installés successivement, les niveaux de protection étant implémentés en utilisant un compteur monotonique.

9. Procédé ou microcontrôleur selon l'une quelconque des revendications 3 à 8, dans lequel la configuration du microcontrôleur, définie par les valeurs modifiées du registre, comprend un état de cycle de vie du microcontrôleur (product_state) correspondant à un mode (provisioning) où le contenu des programmes du microcontrôleur est inaccessible.

10. Procédé selon l'une quelconque des revendications 1 ou 3 à 9, ou microcontrôleur selon l'une quelconque des revendications 2 à 9, dans lequel la deuxième somme de contrôle est calculée périodiquement.

11. Procédé selon l'une quelconque des revendications 1 ou 3 à 9, ou microcontrôleur selon l'une quelconque des revendications 2 à 9, dans lequel le stockage de la première somme de contrôle recopiée est réalisée dans un registre de la première mémoire (UCONF_CRC_EXP).

12. Procédé selon l'une quelconque des revendications 1 ou 3 à 11, ou microcontrôleur selon l'une quelconque des revendications 2 à 11, dans lequel la première mémoire est une mémoire volatile.

13. Procédé selon l'une quelconque des revendications 1 ou 3 à 12, ou microcontrôleur selon l'une quelconque des revendications 2 à 12, dans lequel la deuxième mémoire (104,120) est une mémoire non volatile.

14. Procédé selon l'une quelconque des revendications 1 ou 3 à 13, ou microcontrôleur selon l'une quelconque des revendications 2 à 13, dans lequel la première et la deuxième sommes de contrôle sont basées sur des calculs de redondance cyclique (CRC).

15. Procédé ou microcontrôleur selon l'une quelconque des revendications 3 à 14, dans lequel le calcul des premières et deuxièmes sommes de contrôle ainsi que leur comparaison sont mises en œuvre par une interface mémoire de la première mémoire ou de la deuxième mémoire.
